# EUROPÄISCHE PATENTANMELDUNG

(11) **EP 1 356 883 A1**
(43) Veröffentlichungstag der Anmeldung: **29.10.2003**
(21) Anmeldenummer: 02022667.6
(22) Anmeldetag: 10.10.2002
(51) Int. Cl.: B23B 51/04

(54) **Kernbohrvorrichtung**

(30) Priorität: 26.04.2002 DE 10218566
(71) Anmelder: Quick System Zerspannungstechnik GmbH, 73776 Altbach (DE)
(72) Erfinder: Hindenberger, Reiner, 73666 Baltmannsweiler (DE)
(74) Vertreter: Pfiz, Thomas, Dr.

(57) **Zusammenfassung**

Die Erfindung betrifft eine Kernbohrvorrichtung mit:
a) einer Schneidzähne (36) an ihrem freien Stirnende tragenden, um eine Drehachse drehbaren zylindrischen Hohlbohrkrone (10),
b) einem konzentrisch zu der Hohlbohrkrone (10) angeordneten und in Bohrrichtung voreilenden Zentrierbohrer (12),
c) einer Aufnahmeeinheit (14) zur drehfesten Verbindung der Hohlbohrkrone (10) und des Zentrierbohrers (12) mit einem Drehantrieb über einen in Bohrgegenrichtung abstehenden Spannschaft (16),
d) einem in einem den Spannschaft (16) tragenden rückseitigen Stirnboden (24) der Aufnahmeeinheit (14) in Richtung der Drehachse verschiebbar gelagerten Auswerfermechanismus (18), welcher eine beim Bohrvorschub spannbare Auswerferfeder (68) zum selbständigen Auswerfen des Bohrkerns (22) aufweist.

## Beschreibung

Die Erfindung betrifft eine Vorrichtung zum Kernbohren, insbesondere in Hohlwänden für den Einsatz von Hohlwanddosen einer Elektroinstallation.

Vorrichtungen dieser Art weisen üblicherweise eine zylindrische Bohrhülse bzw. eine Lochsäge zum Einspannen in eine Handbohrmaschine auf, um kreisförmige Wandausnehmungen bzw. - insbesondere bei Hohlwänden - Wanddurchbrüche zu erzeugen, wie sie für Elektroinstallationen häufig in großer Zahl benötigt werden. Nach dem Ausbohren verbleibt in der Bohrhülse ein Bohrkern, der vor dem nächsten Arbeitsgang ausgestoßen werden muss. Als besonders nachteilig hat sich hierbei herausgestellt, daß die herkömmlichen Werkzeuge ein vollständiges Stillsetzen des Drehantriebs erfordern, was zu erheblichen Arbeitszeitverlusten führen kann.

Ausgehend hiervon liegt der Erfindung die Aufgabe zugrunde, die im Stand der Technik bestehenden Nachteile zu überwinden und ein Kernbohrwerkzeug dahingehend zu verbessern, daß bei fertigungstechnisch einfacher Konstruktion eine zuverlässige Funktion und verbesserte Handhabung erreicht wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, einen selbsttätig arbeitenden Auswerfermechanismus zum Auswerfen des Bohrkerns vorzusehen. Dementsprechend wird erfindungsgemäß ein Kernbohrwerkzeug mit folgenden Merkmalen vorgeschlagen:
- einer Schneidzähne an ihrem freien Stirnende tragenden, um eine Drehachse drehbaren zylindrischen Hohlbohrkrone,
- einem konzentrisch zu der Hohlbohrkrone angeordneten und in Bohrrichtung voreilenden Zentrierbohrer,
- einer Aufnahmeeinheit zur drehfesten Verbindung der Hohlbohrkrone und des Zentrierbohrers mit einem vorzugsweise durch eine Handmaschine gebildeten Drehantrieb über einen in Bohrgegenrichtung abstehenden Spannschaft,
- einem in einem den Spannschaft tragenden rückseitigen Stirnboden der Aufnahmeeinheit in Richtung der Drehachse verschiebbar gelagerten Auswerfermechanismus, welcher eine durch den Bohrvorschub spannbare Auswerferfeder zum selbständigen Auswerfen des Bohrkerns aufweist.

Damit wird erreicht, daß die Auswerferfeder durch den Vorschub gegen die zu bearbeitende Wand als Widerlagerfläche selbständig gespannt wird und nach dem Durchbruch der Wand der Ausstoß somit ohne manuellen Eingriff automatisch erfolgt. Der Drehantrieb muss also nicht abgeschaltet werden, und die Bearbeitung kann bei noch laufender Maschine mit Arbeitszeitersparnis fortgesetzt werden. Durch die Lagerung in dem quer zur Drehachse sich erstreckenden Stirnboden kann mit geringem Bauaufwand und geringer Baugröße eine zuverlässige Ausstoßfunktion erreicht werden.

Vorteilhafterweise besitzt der mit der Hohlbohrkrone mitdrehende Auswerfermechanismus einen mit einer Durchtrittsbohrung für den Zentrierbohrer versehenen, unter der Rückstellkraft der Auswerferfeder gegen den auszuwerfenden Bohrkern anliegenden Auswerferkörper. Damit kann zugleich eine zusätzliche Sicherung gegen ein radiales Verkippen erreicht werden. Um die Führungsgenauigkeit weiter zu erhöhen, ist es von Vorteil, wenn der Auswerferkörper eine die Durchtrittsbohrung umrandende und senkrecht zur Drehachse sich erstreckende ebene Anlagefläche für das zu bearbeitende Wandmaterial aufweist, wobei die Anlagefläche in der Ausgangsstellung über die Hohlbohrkrone in Bohrrichtung vorsteht.

Zur weiteren funktionellen Optimierung ist es vorgesehen, daß der Auswerferkörper zumindest im Bereich der Anlagefläche aus einem auf dem zu bearbeitenden Wandmaterial reibungsarm gleitenden Werkstoff, insbesondere aus Messing oder einem Kunststoff besteht.

Eine baulich besonders vorteilhafte Ausgestaltung sieht vor, daß der Auswerferkörper zylindrisch ausgebildet ist und einen rückseitigen Stirnbund als Befestigungsflansch aufweist.

Ein weiterer konstruktiver Vorteil wird dadurch erzielt, daß der Auswerfermechanismus mehrere, vorzugsweise drei parallel zur Drehachse um den Zentrierbohrer herum im gleichen Winkelabstand voneinander angeordnete, den Stirnboden der Aufnahmeeinheit durchsetzende Führungsbolzen aufweist.

Um ein selbsttätiges Auslösen zu ermöglichen, ist es vorteilhaft, wenn die Auswerferfeder zwischen dem Auswerferkörper und dem Stirnboden der Aufnahmeeinheit vorgespannt ist. Dabei ist es günstig, wenn die Auswerferfeder als den Zentrierbohrer umgreifende Schraubendruckfeder ausgebildet ist. Eine weitere besonders vorteilhafte Ausführung sieht vor, daß die Führungsbolzen einen Federkäfig als Ausknickschutz für die Auswerferfeder bilden.

Vorteilhafterweise weist der Auswerfermechanismus eine über eine Zentralbohrung auf dem Spannschaft längsverschiebbar geführte, in der Ausgangsstellung der Auswerferfeder rückseitig gegen den Stirnboden der Aufnahmeeinheit anschlagende Stützscheibe auf. Damit ist bei einem etwaigen Verklemmen des Bohrkerns auch eine manuelle Betätigung möglich.

Eine weitere vorteilhafte Ausgestaltung sieht vor, daß die Aufnahmeeinheit einen topfförmig an den Stirnboden anschließenden Bodenfortsatz aufweist. Um Bohrlänge der Bohrkrone möglichst vollständig ausnutzen zu können, ist es von Vorteil, wenn die Tiefe des Bodenfortsatzes etwa dem Blockmaß der Auswerferfeder entspricht.

Eine effiziente Handhabung lässt sich dadurch erreichen, daß die Hohlbohrkrone über einen vorzugsweise als Bajonettverschluß ausgebildeten, werkzeuglos betätigbaren Schnellwechselverschluß drehfest mit der Aufnahmeeinheit verbindbar ist.

Um die Bohrungstoleranzen weiter zu verringern, ist es vorteilhaft, wenn die Aufnahmeeinheit einen mit einer Ringnut versehenen Ringflansch aufweist und die Hohlbohrkrone vorzugsweise in eng toleriertem Rundlauf in der Ringnut gehalten ist.

Vorteilhafterweise weist der rückseitige Endabschnitt der Hohlbohrkrone einen stufenförmig radial abgesetzten Zentrierring zur Halterung an der Aufnahmeeinheit auf. Damit können Bohrkronen mit verschiedenem Bohrdurchmesser einfach an die Aufnahme angepasst werden.

Ein weiterer Vorteil wird dadurch erzielt, daß die Schneidzähne im stirnseitigen Öffnungsbereich von mantelseitigen Spanausnehmungen der Hohlbohrkrone angeordnet, vorzugsweise als Hartmetallzähne angelötet sind.

Um einen ausreichenden Freiraum gegenüber dem ausgebohrten Material zu schaffen, ist es günstig, wenn die Schneidzähne über die Bohrhülse der Hohlbohrkrone hinaus radial nach innen sowie nach außen überstehen.

Ein passgenauer, wandbündiger Sitz einer in die Bohrung einzusetzenden Hohlwanddose kann dadurch erreicht werden, daß die Hohlbohrkrone im Bereich ihres rückseitigen Endabschnitts über die Schneidzähne radial nach außen vorkragende Senkzähne zur Herstellung einer Randversenkung in der Bohrungswand aufweist.

Eine weitere funktionelle Verbesserung wird dadurch erreicht, daß der Spannschaft in einem in Bohrrichtung weisenden, vorzugsweise radial erweiterten Kopfabschnitt ein Sackloch zur wechselbaren Aufnahme des Zentrierbohrers aufweist, und daß der Spannschaft in eine vorzugsweise durch eine rückseitige Zentrierfase berandete Gewindebohrung des Stirnbodens eingeschraubt ist.

Zur Herstellung einer selbstklemmenden Verbindung mit dem Bohrfutter bzw. den Spannbacken einer Handbohrmaschine ist es von besonderem Vorteil, wenn der Spannschaft an seinem rückseitigen freien Endabschnitt eine Mehrzahl von über seinen Umfang verteilt angeordneten, im Querschnitt konkaven Längsauskehlungen zum Einspannen in ein Bohrfutter aufweist.

Eine weitere vorteilhafte Ausführung sieht vor, daß die Hohlbohrkrone und/oder die Aufnahmeeinheit mit Radialdurchbrüchen zur Spanabfuhr versehen sind.

Im folgenden wird die Erfindung anhand eines in der Zeichnung in schematischer Weise dargestellten Ausführungsbeispiels näher erläutert. Es zeigen
- Fig. 1: eine Kernbohrvorrichtung zur Herstellung von kreisförmigen Wandausnehmungen in einem Axialschnitt;
- Fig. 2: die Kernbohrvorrichtung nach Fig. 1 mit einer beim Ausbohren einer Wand vorgespannten Auswerfereinheit in einem ausschnittsweisen Axialschnitt; und
- Fig. 3: die Hohlbohrkrone der Kernbohrvorrichtung in einer Seitenansicht.

Die in der Zeichnung dargestellte Kernbohrvorrichtung besteht im wesentlichen aus einer Hohlbohrkrone 10, einem konzentrisch zu der Hohlbohrkrone angeordneten voreilenden Zentrierbohrer 12, einer Aufnahmeeinheit 14 zur drehfesten Verbindung der Hohlbohrkrone und des Zentrierbohrers mit einer nicht gezeigten Handbohrmaschine über einen Spannschaft 16 und einem Auswerfermechanismus 18 zum selbständigen Auswerfen eines aus einer Wand 20 ausgebohrten Bohrkerns 22.

Die topfförmig ausgebildete Aufnahmeeinheit 14 umfasst einen rückseitigen Stirnboden 24, einen in Bohrrichtung daran anschließenden zylindrischen Bodenfortsatz 26 und einen randseitig an dem Bodenfortsatz radial abstehenden Ringflansch 28. Der Ringflansch 28 ist mit einem ringförmigen Planeinstich bzw. einer Ringnut 30 zur Aufnahme der Bohrkrone 10 versehen. Zu diesem Zweck sind zwei diametral gegenüberliegende Haltestifte 32 vorgesehen, welche die Nutflanken der Ringnut 30 im Abstand zum Nutgrund radial durchsetzen.

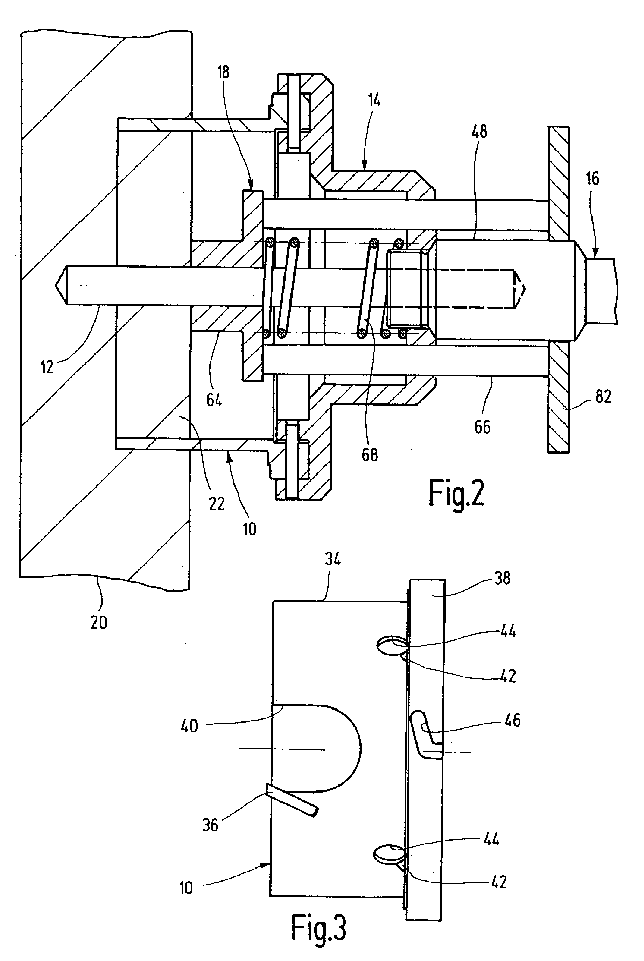

Wie am besten aus Fig. 3 ersichtlich, weist die Hohlbohrkrone 10 eine zylindrische Bohrhülse 34 auf, an deren freiem Stirnende Schneidzähne 36 in Umfangsrichtung verteilt angeordnet sind, und deren rückseitiger Endabschnitt durch einen stufenförmig radial abgesetzten Zentrierring 38 zum Einsatz in die Ringnut 30 gebildet ist. Die Schneidzähne 36 sind im stirnseitigen Öffnungsbereich von mantelseitigen Spanausnehmungen 40 der Bohrhülse 34 angeordnet. Sie bestehen aus angelöteten Hartmetallsegmenten, welche mit ihren Schneiden sowohl in Bohrrichtung als auch radial nach innen und nach außen über die Bohrhülse 34 überstehen. Um eine zusätzliche Randeinfräsung am Bohrlochrand zu erzeugen, sind auf dem abgestuften Zentrierring 38 radial über die Schneidzähne 36 nach außen vorkragende Senkzähne 42 vorgesehen. Im Bereich dieser Senkzähne 42 ist die Bohrhülse 34 von Spanabfuhrbohrungen 44 durchbrochen. Um die Bohrkrone 10 werkzeuglos wechseln zu können, sind in dem Zentrierring 38 zwei rückseitig randoffene, abgewinkelte Aufnahmeschlitze 46 vorgesehen, mit welchen die Haltestifte 32 nach Art einer Renk- oder Bajonettverbindung durch axiales Zusammenstecken und anschließendes radiales Verdrehen der Teile 10, 14 zueinander in Verbindung gebracht werden können. Dabei wird der Zentrierring 38 in eng toleriertem Rundlauf in der Ringnut 30 gehalten.

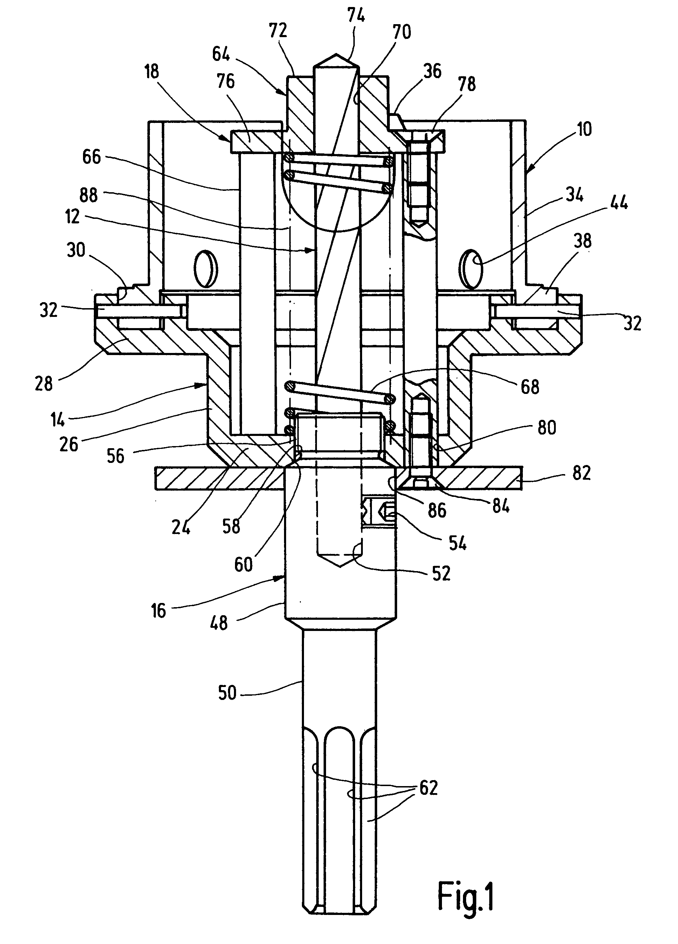

Der in Fig. 1 vollständig gezeigte Spannschaft 16 besteht aus einem in Bohrrichtung weisenden Kopfstück 48 zur Aufnahme des Zentrierbohrers 12 und einem rückseitig daran anschließenden, im Durchmesser gegenüber dem Kopfstück 48 verjüngten Spannstück 50 zur Aufnahme im Bohrfutter. Das Kopfstück 48 ist mit einem zentralen Sackloch 52 versehen, in welchem der Zentrierbohrer 12 über eine mantelseitig angeschraubte Madenschraube 54 wechselbar gehalten ist. Zur lösbaren Halterung in der Aufnahmeeinheit 14 das Kopfstück 48 an einem vorderen Gewindeabschnitt 56 in eine Zentralbohrung 58 des Stirnbodens 24 einschraubbar, wobei eine Randfase 60 für die genaue Ausrichtung in der Drehachse sorgt. Das von dem Kopfstück 48 abgewandte Spannstück 50 ist mit sechs über seinen Umfang verteilt angeordneten Längsauskehlungen 62 versehen, die im Querschnitt konkav vertieft sind, um so eine selbstklemmende Verbindung in den keilförmigen Spannbacken einer Handbohrmaschine zu erzielen.

Der Auswerfermechanismus 18 weist einen Auswerferkörper 64 auf, der über Führungsbolzen 66 in dem Stirnboden 24 der Aufnahmeeinheit 14 in Richtung der Drehachse verschiebbar gelagert ist und durch die Rückstellkraft einer Auswerferfeder 68 in Bohrrichtung beaufschlagt ist. Der hutförmige Auswerferkörper 64 besitzt eine zentrale Durchtrittsbohrung 70 für den Zentrierbohrer 12 und eine die Durchtrittsbohrung umrandende und senkrecht zur Drehachse sich erstreckende vordere Planfläche 72 zur Anlage gegen das zu bearbeitende Wandmaterial. Die Planfläche 72 ist in der in Fig. 1 gezeigten Ausgangsstellung nahe der Bohrspitze 74 des Zentrierbohrers 12 angeordnet und steht damit über die Hohlbohrkrone 10 in Bohrrichtung über. Der rückseitige Stirnbund 76 des Auswerferkörpers 64 dient als Befestigungsflansch für die Führungsbolzen 66 mittels Senkkopfschrauben 78.

Zur kippsicheren Führung sind drei Führungsbolzen 66 parallel zur Drehachse um den Zentrierbohrer 12 herum im gleichen Winkelabstand voneinander angeordnet. Die Führungsbolzen 66 durchsetzen entsprechende exzentrisch angeordnete Axialbohrungen 80 im Stirnboden 24 der Aufnahmeeinheit 14 und sind an einer Stützscheibe 82 mittels Senkkopfschrauben 84 befestigt. Die Stützscheibe 82 liegt in der Ausgangsstellung gegen den Stirnboden 24 rückseitig an und ist über eine Zentralbohrung 86 auf dem Kopfstück 48 des Spannschafts 16 längsverschiebbar geführt.

Die Auswerferfeder 68 ist als Schraubendruckfeder ausgebildet und zwischen dem Auswerferkörper 64 und dem Stirnboden 24 vorgespannt. Das rückseitige Federende wird dabei durch den überstehenden Endabschnitt des Kopfstücks 48 radial gesichert. Zusätzlich bilden die Führungsbolzen 66 gegenüber dem Zentrierbohrer 12 einen Federkäfig 88, um so ein Ausknicken der Auswerferfeder 68 zu verhindern.

Die vorstehend beschriebene Kernbohrvorrichtung lässt sich vor allem zur Herstellung von kreisförmigen Wanddurchbrüchen in Hohlwänden einsetzen, in welche Installationsdosen einer Elektroinstallation eingesetzt werden sollen. Solche Hohlwände können beispielsweise aus Gipskartonplatten im Holzverbund bestehen, wobei durch die Holzausfachung Zwischenräume zwischen den Wänden freigehalten sind. Die darin einzusetzenden Hohlwanddosen bestehen als Spritzgusskörper aus einer Dosenhülse mit die Wand 20 hintergreifenden Krallen, welche über Eindrehschrauben unter Ausübung einer Zugkraft auf einen radial überstehenden Dosenbund gespannt werden können.

Ja nach gewünschtem Dosendurchmesser lässt sich eine entsprechende Hohlbohrkrone 10 auf der Aufnahmeeinheit 14 fixieren. Bei den verschiedenen Hohlbohrkronen variiert der Durchmesser der Bohrhülse 34, während der daran angeformte Flanschring 38 jeweils dieselben Dimensionen aufweist.

In Fig. 2 ist das selbsttätige Vorspannen des Auswerfermechanismus 18 beim Bohrvorschub veranschaulicht. Zunächst wird der Zentrierbohrer 12 an der vorgesehenen Stelle der Wand 20 angesetzt, wobei der mit der Bohrkrone 10 mitdrehende Auswerferkörper 64 mit seiner auf der Wand 20 gleitenden Planfläche 72 eine rechtwinklige Ausrichtung unterstützt. Beim Bohrvorschub wird der Auswerferkörper 64 durch den in die Bohrhülse 34 eindringenden Bohrkern 22 zurückgedrängt, wobei die Auswerferfeder 68 selbständig gespannt wird. In der Anfangsphase, in welcher die Bohrkrone 10 noch nicht in das Wandmaterial eingreift, sorgt die radiale Sicherung des Auswerferkörpers 64 auf dem Zentrierbohrer 12 und der Stützscheibe 82 auf dem Kopfstück 48 des Spannschafts 16 für eine hohe Führungsgenauigkeit. Im Zuge des weiteren Bohrvorschubs wird die Auswerferfeder 68 im Bereich des Bodenfortsatzes 26 der Aufnahmeeinheit 14 komprimiert, so daß die gesamte axiale Länge der Bohrhülse 34 zum Ausbohren zur Verfügung steht. Bei entsprechender Baulänge kann die Hohlbohrkrone 10 die Wand 20 vollständig durchdringen, und der ausgebohrte Bohrkern bzw. die Ronde 22 wird durch den Auswerfermechanismus 18 unter Entspannung der Auswerferfeder 68 selbständig in den Wandzwischenraum ausgestoßen. Dies erfordert keinen manuellen Eingriff und kann bei laufendem Drehantrieb erfolgen, so daß ohne größeren Zeitverlust sogleich die nächste Kernbohrung gesetzt werden kann.

## Patentansprüche

1. Vorrichtung zum Kernbohren, insbesondere in Hohlwänden (20) für den Einsatz von Hohlwanddosen, mit folgenden Merkmalen:
a) einer Schneidzähne (36) an ihrem freien Stirnende tragenden, um eine Drehachse drehbaren zylindrischen Hohlbohrkrone (10),
b) einem konzentrisch zu der Hohlbohrkrone (10) angeordneten und in Bohrrichtung voreilenden Zentrierbohrer (12),
c) einer Aufnahmeeinheit (14) zur drehfesten Verbindung der Hohlbohrkrone (10) und des Zentrierbohrers (12) mit einem vorzugsweise durch eine Handmaschine gebildeten Drehantrieb über einen in Bohrgegenrichtung abstehenden Spannschaft (16),
d) einem in einem den Spannschaft (16) tragenden rückseitigen Stirnboden (24) der Aufnahmeeinheit (14) in Richtung der Drehachse verschiebbar gelagerten Auswerfermechanismus (18), welcher eine beim Bohrvorschub spannbare Auswerferfeder (68) zum selbständigen Auswerfen des Bohrkerns (22) aufweist.

2. Vorrichtung nach Anspruch 1, **dadurch gekennzeichnet, daß** der mit der Hohlbohrkrone (10) mitdrehende Auswerfermechanismus (18) einen mit einer Durchtrittsbohrung (70) für den Zentrierbohrer (12) versehenen, unter der Rückstellkraft der Auswerferfeder (68) gegen den auszuwerfenden Bohrkern (22) anliegenden Auswerferkörper (64) aufweist.

3. Vorrichtung nach Anspruch 2, **dadurch gekennzeichnet, daß** der Auswerferkörper (64) eine die Durchtrittsbohrung (70) umrandende und senkrecht zur Drehachse sich erstreckende ebene Anlagefläche (72) für das zu bearbeitende Wandmaterial aufweist, wobei die Anlagefläche (72) in der Ausgangsstellung der Auswerferfeder (68) über die Hohlbohrkrone (10) in Bohrrichtung vorsteht.

4. Vorrichtung nach Anspruch 2 oder 3, **dadurch gekennzeichnet, daß** der Auswerferkörper (64) aus einem auf dem zu bearbeitenden Wandmaterial (20) reibungsarm gleitenden Werkstoff, insbesondere aus Messing oder einem Kunststoff besteht.

5. Vorrichtung nach einem der Ansprüche 2 bis 4, **dadurch gekennzeichnet, daß** der Auswerferkörper (64) zylindrisch ausgebildet ist und einen rückseitigen Stirnbund (76) als Befestigungsflansch aufweist.

6. Vorrichtung nach einem der Ansprüche 1 bis 5, **dadurch gekennzeichnet, daß** der Auswerfermechanismus (18) mehrere, vorzugsweise drei parallel zur Drehachse um den Zentrierbohrer (12) herum im gleichen Winkelabstand voneinander angeordnete, den Stirnboden (24) der Aufnahmeeinheit (14) durchsetzende Führungsbolzen (66) aufweist.

7. Vorrichtung nach einem der Ansprüche 2 bis 6, **dadurch gekennzeichnet, daß** die Auswerferfeder (68) zwischen dem Auswerferkörper (64) und dem Stirnboden (24) der Aufnahmeeinheit (14) vorgespannt ist.

8. Vorrichtung nach einem der Ansprüche 1 bis 7, **dadurch gekennzeichnet, daß** die Auswerferfeder (68) als den Zentrierbohrer (12) umgreifende Schraubendruckfeder ausgebildet ist.

9. Vorrichtung nach einem der Ansprüche 1 bis 8, **dadurch gekennzeichnet, daß** die Führungsbolzen (66) einen Federkäfig (88) als Ausknickschutz für die Auswerferfeder (68) bilden.

10. Vorrichtung nach einem der Ansprüche 1 bis 9, **dadurch gekennzeichnet, daß** der Auswerfermechanismus (18) eine über eine Zentralbohrung (86) auf dem Spannschaft (16) längsverschiebbar geführte, in der Ausgangsstellung der Auswerferfeder (68) rückseitig gegen den Stirnboden (24) der Aufnahmeeinheit (14) anschlagende Stützscheibe (82) aufweist.

11. Vorrichtung nach einem der Ansprüche 1 bis 10, **dadurch gekennzeichnet, daß** die Aufnahmeeinheit (14) einen topfförmig an den Stirnboden (24) anschließenden Bodenfortsatz (26) aufweist.

12. Vorrichtung nach Anspruch 11, **dadurch gekennzeichnet, daß** die Tiefe des Bodenfortsatzes (26) etwa dem Blockmaß der Auswerferfeder (68) entspricht.

13. Vorrichtung nach einem der Ansprüche 1 bis 12, **dadurch gekennzeichnet, daß** die Hohlbohrkrone (10) über einen vorzugsweise als Bajonettverschluss ausgebildeten, werkzeuglos betätigbaren Schnellwechselverschluss (32,46) drehfest mit der Aufnahmeeinheit (14) verbindbar ist.

14. Vorrichtung nach einem der Ansprüche 1 bis 13, **dadurch gekennzeichnet, daß** die Aufnahmeeinheit (14) einen mit einer Ringnut (30) versehenen Ringflansch (28) aufweist, und daß die Hohlbohrkrone (10) vorzugsweise in eng toleriertem Rundlauf in der Ringnut (30) gehalten ist.

15. Vorrichtung nach einem der Ansprüche 1 bis 14, **dadurch gekennzeichnet, daß** der rückseitige Endabschnitt der Hohlbohrkrone (10) einen stufenförmig radial abgesetzten Zentrierring (38) zur Halterung an der Aufnahmeeinheit (14) aufweist.

16. Vorrichtung nach einem der Ansprüche 1 bis 15, **dadurch gekennzeichnet, daß** die Schneidzähne (36) im stirnseitigen Öffnungsbereich von mantelseitigen Spanausnehmungen (40) der Hohlbohrkrone (10) angeordnet, vorzugsweise als Hartmetallzähne angelötet sind.

17. Vorrichtung nach einem der Ansprüche 1 bis 16, **dadurch gekennzeichnet, daß** die Schneidzähne (36) über die Bohrhülse (34) der Hohlbohrkrone (10) hinaus radial nach innen sowie nach außen überstehen.

18. Vorrichtung nach einem der Ansprüche 1 bis 17, **dadurch gekennzeichnet, daß** die Hohlbohrkrone (10) im Bereich ihres rückseitigen Endabschnitts über die Schneidzähne (36) radial nach außen vorkragende Senkzähne(42) zur Herstellung einer Randversenkung in der Bohrungswand aufweist.

19. Vorrichtung nach einem der Ansprüche 1 bis 18, **dadurch gekennzeichnet, daß** der Spannschaft (16) in einem in Bohrrichtung weisenden, vorzugsweise radial erweiterten Kopfabschnitt (48) ein Sackloch (52) zur wechselbaren Aufnahme des Zentrierbohrers (12) aufweist.

20. Vorrichtung nach einem der Ansprüche 1 bis 19, **dadurch gekennzeichnet, daß** der Spannschaft (16) in eine vorzugsweise durch eine rückseitige Zentrierfase (60) berandete Gewindebohrung (58) des Stirnbodens (24) eingeschraubt ist.

21. Vorrichtung nach einem der Ansprüche 1 bis 20, **dadurch gekennzeichnet, daß** der Spannschaft (16) an seinem rückseitigen freien Endabschnitt eine Mehrzahl von über seinen Umfang verteilt angeordneten, im Querschnitt konkaven Längsauskehlungen (62) zum Einspannen in ein Bohrfutter aufweist.

22. Vorrichtung nach einem der Ansprüche 1 bis 21, **dadurch gekennzeichnet, daß** die Hohlbohrkrone (10) und/oder die Aufnahmeeinheit (14) mit Radialdurchbrüchen (44) zur Spanabfuhr versehen sind.
